# EUROPEAN PATENT SPECIFICATION

(11) **EP 2 673 719 B1**
(45) Date of publication and mention of the grant of the patent: **25.11.2015**
(21) Application number: 12702281.2
(22) Date of filing: 07.02.2012
(51) Int. Cl.: G06F 17/30, H04L 29/08, H04L 29/06, H04L 12/28

(54) **METHOD OF SHARING DATA IN A HOME NETWORK AND SYSTEM IMPLEMENTING THE METHOD**
VERFAHREN UND SYSTEM ZUR GEMEINSAMEN DATENNUTZUNG IN EINEM HEIMNETZWERK
PROCÉDÉ DE PARTAGE DE DONNÉES DANS UN RÉSEAU DOMESTIQUE ET SYSTEME METTANT EN OEUVRE LE PROCÉDÉ

(30) Priority: 08.02.2011 EP 11305126
(43) Date of publication of application: 18.12.2013
(73) Proprietor: Thomson Licensing, 92130 Issy-les-Moulineaux (FR)
(72) Inventor: TAPIE, Thierry, F-35576 Cesson-Sévigné (FR); DEFRANCE, Serge, F-35576 Cesson-Sévigné (FR); GENDROT, Rémy, F-35576 Cesson-Sévigné (FR)
(74) Representative: Vidon Brevets & Stratégie
(86) International application number: PCT/EP2012/052009
(87) International publication number: WO 2012/107426

(56) References cited:
- WO-A1-2005/106716

## Description

### 1. Field of invention.

The present invention generally relates to digital data storage and access, and more particularly, to a method and device for sharing content in a heterogeneous networks comprising a plurality of different devices using a plurality of network resource sharing protocols and different file systems to store data.

### 2. Technical background.

With the widespread deployment of user consumer devices and home appliances equipped with wired and wireless network interfaces, one can currently speak of home networks, even if most of the current home networks are not integrated in the sense that most devices in the home network do not communicate between them, but only use the network to communicate with the outside world, such as the Internet. Today's home network is a complex environment of heterogeneous services, (sub-) networks and devices, operating relatively independently. Some devices of the home network incorporate a mass storage device. Removable mass storage devices (hard disks, USB (Universal Serial Bus) keys, memory cards) may be connected temporarily to different 'fixed' devices that are more or less permanently part of the home network. Users of the home network store and copy data without paying much attention, storing data on the device where it is acquired and copying data on the device where it needed, notwithstanding the existence of a network connection between the devices. In many cases, removable mass storage devices are used to exchange data between home network devices, which is a quite unsatisfying situation.

The lack of possibilities for data exchange between devices of the home network, is in a large part due to the heterogeneous character of the home network devices, which often are not using the communication protocols, are not using the same operating system, are not using the same network resource sharing protocol and/or file system. All of these incompatibilities makes sharing of data among the home network devices difficult or even impossible, especially when the user does not have any particular skills in the domain of data communication networks.

Prior art document WO 2005/106716, published on 10 November 2005, discloses a method for a shared file system.

There is thus a need for further integration of the heterogeneous devices in the networks such as home networks, so that the network devices can really communicate, exchange and share data, and a home network user can take full advantage of the home network.

### 3. Summary of the invention.

In the following, the wording 'file system', may mean a single file in a directory, multiple file into a directory, and multiple files in multiple directories and subdirectories.

The present invention aims at alleviating some inconveniences of prior art.

Notably, the invention proposes a method of sharing data in a network, the network comprising a plurality of devices using a plurality of different network resource sharing protocols, the method being implemented by a proxy device having a file system, the method comprising a step of reception, from a first network device, of a request for registration of the first network device for using the network, the proxy device obtaining, from the first network device and during the registration, data comprising information representative of a type of operating system used by the first device; and a step of determination, as function of the type of operating system used by the first device, of a type of network resource sharing protocol to be used by the proxy device for giving the first device access to data shared by other network devices; and a step of creation, according to the determined type or network resource sharing protocol, of a first directory in the file system of the proxy device, the first directory being destined to be an access point for the proxy device to data shared and stored by the first device; and a step of transmission to the first device of an application comprising instructions adapted to the operating system and the network resource sharing protocol used by the first device; and a step of execution of the application by the first device, the application creating a second directory in a file system of the first device, the second directory comprising a storage space for the first device where the first device can store data to share with other network devices, and the application creating in the file system of the first device, of a third directory giving access via the file system of the proxy device to data shared by at least one other network device.

According to a variant embodiment of the invention, the method further comprises a step of connection of a device to the network, in which the proxy device, as part of the connection step, attaches the second directory created on the first device to the first directory created on the proxy device, and attaches to the third directory one or more directories on the proxy device giving the first device access to data shared by at least one other network device.

According to another variant embodiment of the invention the proxy device translates file access methods applicable to the type of network resource sharing protocol used by the first device to file access methods applicable to at least one type of file access method used by the at least one other network device, and the proxy device transmitting the translated file access methods to the at least one other network device.

According to another variant embodiment of the invention the file system of the proxy device is a virtual file system.

The invention also relates to a system comprising a proxy device for sharing data in a network, and a first network device characterized in that the network comprises a plurality of devices using a plurality of different network resource sharing protocols, the proxy device having a file system, the proxy device comprising a network interface for reception, from the first network device, of a request for registration of the first network device for using the network, the proxy device obtaining, from the first network device and during the registration, data comprising information representative of a type of operating system used by the first device; and a processing unit for determination, as function of the type of operating system used by the first device, of a type of network resource sharing protocol to be used by the proxy device for giving the first device access to data shared by other network devices; said central processing unit further configured for creation, according to the determined type of network resource sharing protocol, of a first directory in the file system of the proxy device, the first directory being destined to be an access point for the proxy device to data shared and stored by the first device; and a network interface for transmission to the first device of an application comprising instructions adapted to the operating system and the network resource sharing protocol used by the first device; and the application, when executed by the first device, creating a second directory in a file system of the first device, the second directory comprising a storage space for the first device where the first device can store data to share with other network devices, and the application creating in the file system of the first device, of a third directory giving access via the file system of the proxy device to data shared by at least one other network device.

### 4. List of figures.

More advantages of the invention will appear through the description of particular, non-restricting embodiments of the invention. The embodiments will be described with reference to the following figures:
Figure 1 shows a typical prior-art home network environment where the invention can be implemented.
Figure 2 shows two possible embodiments of the invention based on such a typical home network as depicted in figure 1.
Figure 3 shows an implementation of a proxy device according to the invention, such as proxy 221 of figure 2.
Figure 4 further explains the method of the invention implemented by a proxy device such as proxy 221 or proxy 220 of figure 2 with the help of a sequence diagram.

### 5. Detailed description of the invention.

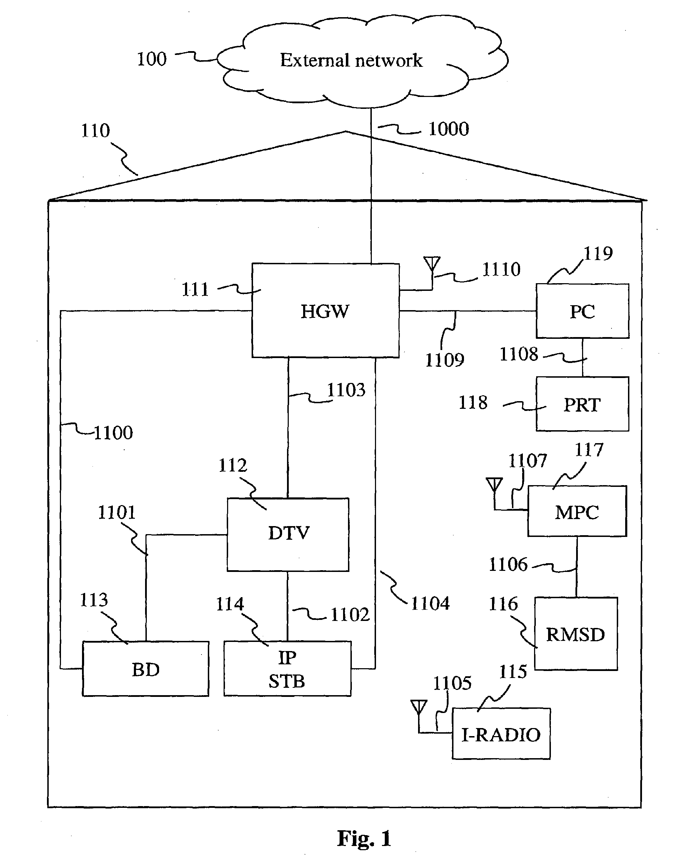

**Figure 1** shows an example of a typical prior-art home network where the invention can be implemented. The home network is implemented in user premises 110. An ADSL (Asymmetric Digital Subscriber Line) 1000 connects the user premises to an external network such as the Internet 100. The prior-art home network comprises the following devices:
- a gateway (HGW for Home GateWay) 111;
- a Blu-ray disc player (BD for Blu-ray Disc) 113;
- a digital television 112 (DTV for Digital TeleVision) set with DLNA (Digital Living Network Alliance) connectivity;
- an Internet protocol television set top box 114 (IPTV STB);
- an Internet radio 115 (I-RADIO);
- a mobile personal computer 117 (MPC);
- a removable mass storage device 116 (RMSD);
- a personal computer 119 (PC);
- a printer 118 (PRT).

These devices are interconnected with several types of connections:
- wired Ethernet connections 1100, 1104, 1109 connecting DB 113, IPSTB 114 and PC 119 to HGW 111;
- wireless connections 1110, 1105, 1107, connecting I-radio 115 and MPC 117 to HGW 111;
- HDMI connections 1101, 1102, connecting BD 113 and IPSTB 114 to DTV 112;
- USB connections 1106 and 1108 connecting RSMD 116 and PRT 118 to M PC 117 respectively to PC 119.

BD 113 and IPSTB 114 are both connected to DTV 112 via individual HDMI connections, allowing them to transmit image and sound on the DTV 112, and allowing the DTV 112 to control their functions (play, stop, pause, change channel); for example, a user can control BD player 113 with the DTV's remote control (not shown). BD 113 is further connected to HGW 111 via an Ethernet connection, which allows BD 113 to access the Internet and provide BD-Live content for movie trailers and additional content related to a Blu-Ray disc in the player. IPSTB 114 is connected to HGW 111 via Ethernet connection 1104, over which IPSTB 114 receives television- and radio programmes and EPG (Electronic Program Guide) data from a provider on the Internet. Internet radio 115 has a WiFi connection 1105 over which it receives streaming audio data from the Internet. MPC 117 is equipped with a WiFi connection 1107 which allows it to access the Internet via WiFi interface 1110 on HGW 111. PC 119 is equipped with Ethernet connection 1109 which allows it to access the Internet via HGW 111. A printer 118 PRT is connected via an USB connection 1108 to PC 119. DTV 112 is connected to HGW 111 via an Ethernet connection 1103 which allows DTV 112 to access the Internet via HGW 111 for reception of audio and video data from the Internet.

The typical prior-art home network of figure 1, is thus an assembly of devices that use different operating systems (example: Windows, Linux, Mac OS), different data communication buses (HDMI, USB, Ethernet) and different network resource sharing protocols (SMB (Server Message Block, CIFS (Common Internet File System), NFS (Network File System) allowing among others to share files with other network devices, which are or are not managed by the home network user. Some devices are capable of communicating together; DTV 112 with BD 113 and IPSTB 114 via HDMI and DTV 112 with PC 119 via Ethernet, using the DLNA connectivity of the DTV 112 and communicating with a UPnP (Universal Plug and Play) server on PC 119; MPC 117 can connect to PC 119 to access its printer PRT 118 using Windows file sharing. Most devices however use the home network connection uniquely to get access to the Internet. Many devices in the home network incorporate a data storage device, but the data stored on these devices remains mostly inaccessible for other devices. In addition, the home network comprises devices that are not under the control of the home network user, such as HGW 111 and IPSTB 114, which are controlled by the IPTV provider. Data sharing is cumbersome to put into place and difficult to manage as new devices are added and old devices are removed. A user that is familiar with data communication is able to get some devices to communicate with each other but to the average user, the vision of the home network remains limited to a set of individual devices that each have its own, well defined function, notwithstanding their interconnection in a network, and the user is thus not able to take full advantage from the presence of a network to have the devices communicate together and thus provide new and improved functions.

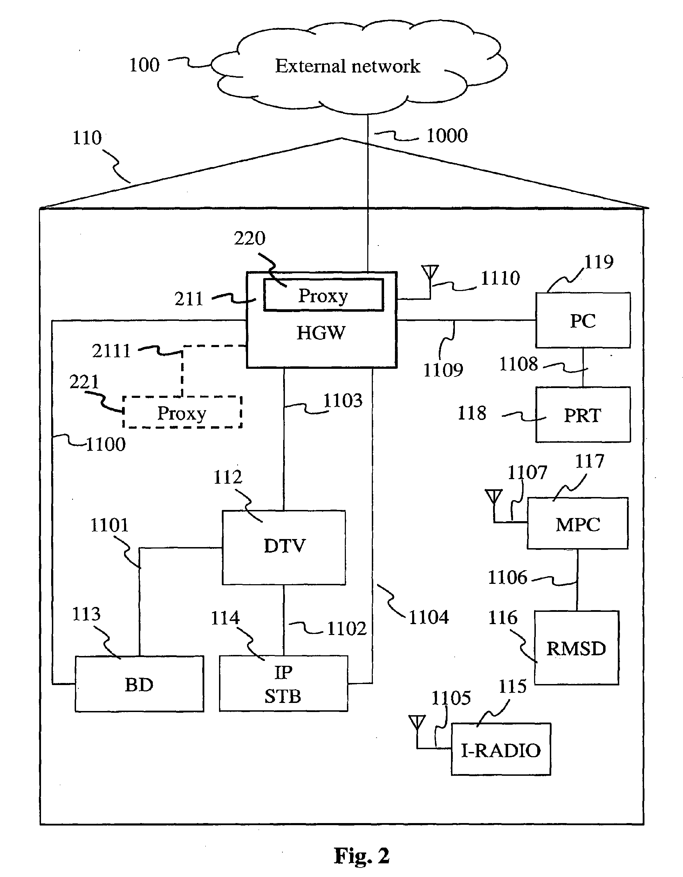

**Figure 2** shows an embodiment of the invention based on such a typical heterogeneous home network as depicted in figure 1. In the home network, a central role is distributed to the home gateway. The home gateway is a central device in the home network, interconnecting most devices and having a high availability, remaining powered on most of the time. According to a particular embodiment of the invention, an always-on device, such as a gateway, hosts a so-called proxy 220 that provides data sharing services to the devices in the home network. According to a variant embodiment of the invention, the proxy is implemented on any of the other devices connected to the home network, e.g. on PC 119 (not shown). According to yet another variant embodiment of the invention, the proxy is implemented in the form of a dedicated proxy device such as device 221 (shown in fig. 1 by means of dotted lines). Whatever variant is implemented, it is advantageous to implement the proxy on a device that remains always on, to ensure maximum availability of the data sharing services that the proxy device provides for the devices in the home network. The proxy device according to the invention is used as an interface for data sharing between the home network devices, being a central access point for data sharing between the home network devices, and implementing all the different network resource sharing protocols used by the different home network devices; and advantageously requiring no installation of specific software on the home network devices and requiring no data duplication, each home network device being able, advantageously and according to the invention, of accessing data shared by the other network devices according its own network resource sharing protocol and 'seeing' shared data as if the shared data is part of its own file system. For home network devices that have data to share, the proxy device exports the data shared by the other network devices (hereinafter referred to as 'sharing device') according to the network resource sharing protocol variant used by the device to which access to the shared data is given (hereinafter referred to as 'accessing device'). To give an accessing device access to the data that is shared by one or more sharing devices, the proxy exports the shared data according to the network resource sharing protocol variant used by the accessing device, and an application distributed by the proxy device to the accessing device mounts the export into the file system of the accessing device. The application is specifically adapted to the operating system and network resource sharing protocol of the home network device. The application can be implemented in different forms, such as in the form of an executable script included in a web page, or in the form of a (signed or not) Java applet for enforced security and increased portability. This way, the data shared by the sharing network devices is presented to the accessing device as being attached to the file system of the accessing device, while still remaining stored on sharing devices that propose the shared data. When the accessing device accesses data shared by sharing devices, the proxy device translates file access methods issued according to the file system used by the accessing device to file access methods used by the sharing device where the shared data is physically stored. Thus, advantageously, file operations issued by the accessing device, according to the network resource sharing protocol used by the accessing device, on shared files are translated when needed (i.e. when sharing device and accessing device use incompatible network resource sharing protocols) by the proxy device into file operations used by the network resource sharing protocol of the sharing device. Advantageously, the proxy is built on top of a virtual file system, such as Linux VFS, to take full advantages of the abstraction layers that such a file system proposes. The VFS allowing clients to access different types of concrete file systems in a uniform way. Notably, a VFS can, for example, be used to access local and network storage devices transparently without the client application noticing the difference. It can be used to bridge the differences in Windows, Mac OS and Linux file systems, so that applications can access files on local file systems of those types without having to know what type of file system they are accessing.

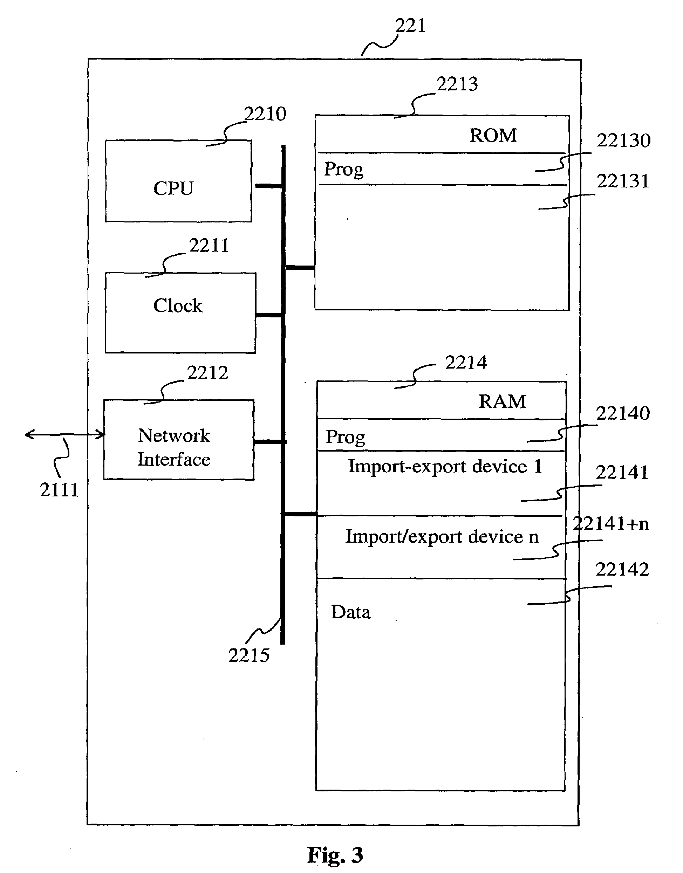

**Figure 3** shows an implementation of a proxy device according to the invention, such as proxy 221 of figure 2, according to a particular embodiment of the invention.

The proxy 221 comprises the following elements:
- a central processing unit 2210. or CPU;
- a clock unit 2211;
- a network interface 2212;
- a non-volatile memory ROM 2213; and
- a volatile memory RAM 2214.

All of these components are interconnected via a data- and communication bus 2215. CPU 2210 controls the functioning of the device 221 according to a program that is stored in ROM 2213 in a memory zone 22130. This program also comprises the previously discussed application that is transmitted to a device during registration to the home network and according to a particular embodiment of the invention also comprises a web server providing a web interface allowing devices to connect to the home network via the web interface and propose or not to share data. Clock device 2211 provides the other components of proxy 221 with a common timing in order to sequence and synchronize their operation. Network interface 2212 receives data from and transmits data to other devices connected to the home network such as BD 113, DTV 112, IPSTB 114, I-radio 115, MPC 117, PC 119 and HGW 111 via connection 2111. Memory zone 2213 comprises instructions that implement the method of the invention in memory zone 22130. Upon powering on of device 221, CPU 2210 copies the program 'Prog' stored in ROM 2213 memory zone 22130 into memory zone 22140 of RAM memory 2214, and executes the copied program. Upon execution of the copied program, the program allocates memory space for variables needed for its execution in memory zone 22143. The device 221 is now started and upon reception of a request for a connection, the method of the invention is activated. Memory zones 22141 to 22141+n of RAM memory 2214 comprise space for storing data related to exportation and importation of home network devices such as IP addresses and directory names.

Device 2214 further comprises a data space 22142 where the file system of the proxy device is implemented. Alternatively, this file system is implemented on a hard disk drive.

Alternatively, at least some parts of RAM 2214 is implemented through an NVRAM (Non-volatile RAM) memory, thereby advantageously allowing these at least some parts of the RAM memory to be persistent with regard to power failures.

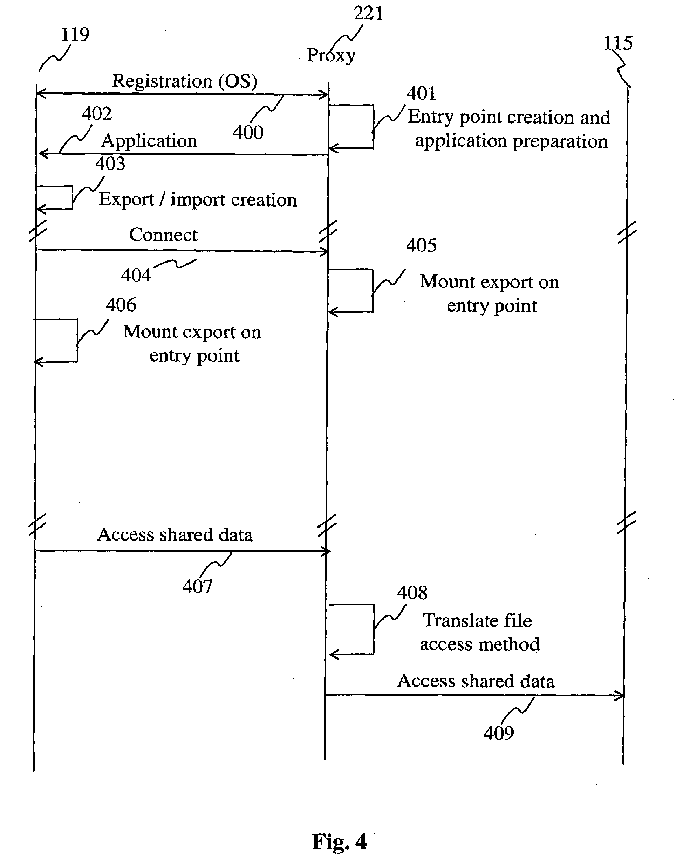

**Figure 4** further explains the method of the invention as implemented by a proxy device such as proxy device 221 or 220 of figure 2 with the help of a sequence diagram. The implementation of the invention is not limited to the sequence of the steps as represented in figure 4. Notably, some of the steps can be parallelized in order to gain processing time.

Double forward slashes in the figure ("//") mean a break in the sequence. The sequence diagram comprises three parts, separated by double forward slashes. In the first part, a first device that whishes to use the home network or that wishes to share data with devices on the home network registers with the proxy. In the second part, the same device connects to the home network. In the third part, the same device accesses data shared by another device.

400: As a first step, device 119 transmits to the proxy a request to register to the home network. According to a particular embodiment of the invention, the request comprises information that allows the proxy to know which type of network resource sharing protocol is used by sharing device 119, such as a type of Operating System used. According to a variant embodiment of the invention, the discussed information is obtained during the registration, for example during several data exchanges with device 119. This latter variant has the advantage, to require no initiative from the registering device 119 to provide the information in the request.

401: Upon reception of the registration request by the proxy 221, and based on the discussed information obtained, the proxy 221 determines the type of network resource sharing protocol that is to be used for the device 119. Further as part of this step, the proxy device 221 creates a first directory in the file system of the proxy 221. This first directory will give the proxy device access, via a mount operation, to a second directory that will be created as discussed hereafter on the device 119, where device 119 can store data that it wishes to share. Alternatively, device 119 can store in the second directory so-called links to data which it wishes to share with other home network devices to avoid creating data copies.

402: In this step, the proxy transmits an application to device 119 which allows to create different directories in the file system of device 119 such as the mentioned second directory for storing data to share, and such as one or more directories giving the device 119, via the proxy device, access to data shared by other network devices. The application is adapted to be executable by the Operating System of the device 119 and comprises instructions that are adapted to the network resource sharing protocol used by the device 119, and is thus adapted to create the necessary structures (directories, subdirectories) for the data sharing in the file system of the device 119.

403: In this step, the device 119 executes the transmitted application. This results in the creation of the mentioned second directory in the file system of the device 119 (for example named 'MyShares'), where the device 119 can store data that it wishes to share with the other network devices.

In addition, the application creates a third directory (for example named 'OthersShares') in the file system of the device 119, that will give the device 119 access to data shared by other devices.

According to terminology used in the domain of file systems, the second directory is a directory on the device 119 that will be exported to the proxy and mounted by the proxy on the first directory that is created on the proxy device for that purpose. On can also say, from the point of view of the proxy device, that the second directory is imported on the proxy. In the third directory one or more directories giving access to data shared by one or more other network devices will be mounted as they are exported to the device 119.

For reasons of simplicity, it is supposed in the depicted scenario that there are other devices that propose data to share, and that they are connected to the proxy so that access points (directories) on the proxy device are present that give access to the data shared by these devices.

404: At a given moment in time, the proxy receives a connection request from device 119.

405/406: Upon reception of the connection request 404, the proxy device 221 mounts (405), or attaches, the previously discussed second directory created on the device 119 to the previously discussed first directory that has been created on the proxy device. Also, the device 119 automatically mounts (406) in the previously discussed third directory created in the file system of device 119, directories on the proxy device giving the device 119 access to data shared by any other devices in the network.

407: Now that the one or more shared data directory is/are mounted on device 119 and on the proxy, the device 119 has access to the files and directories in the shared data directory, and device 119 gives access to its shared data to other network devices. Such an access is illustrated by arrow 407 illustrating that an access to a file shared by another device is requested, such as read, write, etc, according to the type of file methods used by the network resource sharing protocol device 119.

408: The proxy, receiving this file access request, translates the file access request to one or more file access requests that are applicable for the type of network resource sharing protocol used by device 115.

409: The translated file access request(s) is/are then transmitted to the device 115. One simple file access may result in several file requests to do the required operation, depending on the operation and the different network resource sharing protocols used.

Discussion of implementation variants with reference to the discussed steps:
400/404: According to a particular embodiment of the invention, the registration request, and possibly also the connection request is done via a web application running on the proxy device, which allows home network devices to register with and to connect to the home network. Part of the web application is a web page in which a user that wants to register / connect a device can specify if the device proposes to share data with other devices on the network, and if so, which data and to what device and/or which user(s) and with which access rights.
402: According to particular variant embodiments of the invention, the application transmitted to the device 119 is in the form of a batch file, or in the form of a downloadable executable program such as a Java applet, or in the form of a script in a web application such as in the web application previously discussed.

An example implementation of the proxy device, as depicted in figure 3, comprises means to implement the invention. Notably, CPU 2210 provides means for implementing step 400 of reception of a registration request as discussed above, means for implementing a determination step 401 as discussed above, and means for implementing a creation step 401 as discussed above. Furthermore, a network interface 2212 provides means for implementation of a transmission step 402 as discussed above.

According to a variant embodiment of the invention, the devices or users (i.e. 'clients') of the network that wish to share data with the other devices in the network using the proxy of the current invention make a differentiation according to which data they want to share and with which other device(s) or user(s); i.e. they make a difference between public and restricted shared data. For example, device / user X has data A to share with all other devices / users in the network {Y, Z} (i.e. public share), but data B is to be shared only with specific device / user Y (i.e. restricted share). According to the invention, devices / users Y and Z thus have both access to data A shared by X; but only Y has additionnaly access to restricted shared data B; Y and Z are said to have 'differentiated views'. Such a differentiated view mechanism can be implemented using the principles of the current invention. During the registration request or once registrated, a device can inform the proxy that of each separate shares and their intended destinator. Using the preceding case as an example and Fig. 4 as a reference, in step 400 device X informs the proxy that it has public data to share, and restricted data to share with Y only. In step 401, the proxy creates two 'first' directories in the proxy's file system, one for X-public and one for X-restricted-Y. In step 402, the proxy transmits an application to X. In step 403, the application creates two different 'second' directories in the file system of X, i.e. a directory 'MySharesPublic' and a directory 'MySharesRestrictedY', and a 'third' directory giving X access to files shared by the other network devices, e.g. 'Others_Shares'. When the proxy receives a connection request 404 from X, in steps 405/406 proxy mounts previous discussed 'second' directories (MySharesPublic and MySharesRestrictedY) to the respective 'first' directories (X-public and X-restricted-Y), and mounts directories on the proxy giving X access to data shared by the other network devices, in the 'third' directory created in the file system of X ('Others_Shares'). Similar operations are done for devices Y and Z. But Y and Z have 'differentiated views': they have a different view on data shared by X. In Z's 'Others_Shares', only the data in MySharesPublic of X is visible. In Y's 'Others_Shares', data in MySharesPublic of X is visible, but also data in 'MySharesRestrictedY' is visible.

The network described in figure 2 is a mere example network in which the invention can be implemented. Other network configurations are possible while remaining compatible with the invention, comprising for example more than one user premise, with each one or more local networks. The architecture of the local network, in figure 2, may also be composed differently, according to the number of devices, the type of devices used, and/or the applications used. Likewise, the interface that is illustrated for device 221 is depicted as Ethernet interface, but the invention is not limited to the use of Ethernet technology. In figure 2 two alternatives are given for implementation of a proxy device according to the invention, such as a distinct device 221 or a device 220 implemented inside a gateway 211, however implementation of the invention is not limited to implementation on a gateway or as a stand-alone device, the invention may very well be implemented on any device connected to the home network for example on personal computer 119, or on a not-depicted Ethernet router.

Other types of proxy devices than devices 221 and 220 as illustrated by figure 2 are possible while still being compatible with the invention, such as a device with multiple processing units. Alternatively, the invention is implemented using a mix of hard-and software components, where dedicated hardware components relieve the CPU of the proxy device of tasks that are alternatively executed in software to gain processing speed. According to a particular embodiment, the invention is entirely implemented in hardware, for example as a dedicated component (for example as an ASIC, FPGA or VLSI) (respectively « Application Specific Integrated Circuit », « Field-Programmable Gate Array » and « Very Large Scale Integration ») or as distinct electronic components integrated in a device or in a form of a mix of hardware and software.

## Claims

1. Method of sharing data in a network, **characterized in that** said network comprises a plurality of devices using a plurality of different network resource sharing protocols, said method being implemented by a proxy device (220, 221) having a file system, said method comprising the following steps:
reception (400), from a first network device, of a request for registration of said first network device for using said network, said proxy device (220, 221) obtaining, from said first network device and during said registration, information allowing identification of a type of operating system and a type of network resource sharing protocol used by said first device;
determination (401), as a function of said type information, of a type of network resource sharing protocol to be used by said proxy device (220, 221) for giving said first network device access to data shared by other network devices;
creation (401), according to said determined type of network resource sharing protocol, of a first directory in said file system of said proxy device (220, 221), said first directory being destined to be an access point for said proxy device to data shared and stored by said first device;
transmission (402) to said first network device of an application comprising instructions adapted to said operating system and said network resource sharing protocol used by said first device;
execution (403) of said application by said first device, said application creating, in said file system of said first device, a second directory comprising a storage space for said first device where said first device can store data to share with other network devices, and a third directory giving access via said file system of said proxy device (220, 221) to data shared by at least one other network device.

2. Method according to claim 1, **characterized in that** said method comprises a step of connection (404) of a network device to said network, in which said proxy device (220, 221), as part of said connection step, attaches said second directory created on said first network device to said first directory created on said proxy device (220, 221), and attaches to said third directory one or more directories on the proxy device (220, 221) giving the first network device access to data shared by at least one other network device.

3. Method according to claim 1 or 2, **characterized in that** said proxy device (220, 221) translates file access methods applicable to said type of network resource sharing protocol used by said first network device to file access methods applicable to at least one type of file access method used by said at least one other network device, and said proxy device (220, 221) transmitting said translated file access methods to said at least one other network device.

4. Method according to any of claims 1 to 3, **characterized in that** said file system of said proxy device (220, 221) is a virtual file system.

5. System comprising a proxy device (220, 221) for sharing data in a network and a first network device, **characterized in that** said network comprises a plurality of network devices using a plurality of different network resource sharing protocols, said proxy device (220, 221) having a file system, said proxy device comprising the following means:
a network interface (2212) for reception (400), from the first network device, of a request for registration of said first network device for using said network, said proxy device (220, 221) obtaining, from said first network device and during said registration, information allowing identification of a type of operating system and a type of network resource sharing protocol used by said first network device;
a processing unit (2210) for determination (401), as a function of said information, of a type of network resource sharing protocol to be used by said proxy device (220, 221) for giving said first network device access to data shared by other network devices;
said processing unit (2210) being further configured for creation (401), according to said determined type of network resource sharing protocol, of a first directory in said file system of said proxy device (220, 221), said first directory being destined to be an access point for said proxy device to data shared and stored by said first network device;
a network interface (2212) for transmission (402) to said first network device of an application comprising instructions adapted to said operating system and said network resource sharing protocol used by said first network device; and
said application, when executed (403) by said first network device, creating, in said file system of said first network device, a second directory comprising a storage space for said first network device where said first network device can store data to share with other network devices, and a third directory giving access via said file system of said proxy device (220, 221) to data shared by at least one other network device.

6. System according to claim 5, **characterized in that** said processing unit of said proxy device is further configured to connect a network device to said network, and to attach said second directory created on said first network device to said first directory created on said proxy device, and to attach to said third directory one or more directories on the proxy device giving the first network device access to data shared by at least one other network device.

7. System according to claim 5 or 6, **characterized in that** said processing unit of said proxy device is further configured to translate file access methods applicable to said type of network resource sharing protocol used by said first network device to file access methods applicable to at least one type of file access method used by said at least one other network device, and that said network interface of said proxy device is further configured to transmit said translated file access methods to said at least one other network device.

## Patentansprüche

1. Verfahren zur gemeinsamen Nutzung von Daten in einem Netz, **dadurch gekennzeichnet, dass** das Netz mehrere Netzvorrichtungen umfasst, die mehrere unterschiedliche Protokolle für die gemeinsame Nutzung von Netzbetriebsmitteln verwenden, wobei das Verfahren durch eine Proxy-Vorrichtung (220, 221) mit einem Dateisystem implementiert wird, wobei das Verfahren die folgenden Schritte umfasst:
Empfang (400) einer Anforderung für die Registrierung einer ersten Netzvorrichtung zum Verwenden des Netzes von der ersten Netzvorrichtung, wobei die Proxy-Vorrichtung (220, 221) von der ersten Netzvorrichtung und während der Registrierung Informationen, die die Identifizierung eines Typs des Betriebssystems und eines Typs des Protokolls für die gemeinsame Nutzung von Netzbetriebsmitteln, die von der ersten Netzvorrichtung verwendet werden, ermöglichen, erhält;
Bestimmung (401) eines Typs des Protokolls für die gemeinsame Nutzung von Netzbetriebsmitteln, das von der Proxy-Vorrichtung (220, 221) verwendet werden soll, in Abhängigkeit von den Typinformationen, um der ersten Netzvorrichtung Zugriff auf von anderen Netzvorrichtungen gemeinsam genutzte Daten zu geben;
Erzeugung (401) eines ersten Verzeichnisses in dem Dateisystem der Proxy-Vorrichtung (220, 221) in Übereinstimmung mit dem bestimmten Typ des Protokolls für die gemeinsame Nutzung von Netzbetriebsmitteln, wobei das erste Verzeichnis für die Proxy-Vorrichtung als ein Zugriffspunkt auf von der ersten Netzvorrichtung gemeinsam genutzte und gespeicherte Daten bestimmt wird;
Sendung (402) einer Anwendung, die Anweisungen umfasst, die für das Betriebssystem und für das Protokoll für die gemeinsame Nutzung von Netzbetriebsmitteln, die von der ersten Netzvorrichtung verwendet werden, ausgelegt sind, an die erste Netzvorrichtung;
Ausführung (403) der Anwendung durch die erste Netzvorrichtung, wobei die Anwendung in dem Dateisystem der ersten Netzvorrichtung ein zweites Verzeichnis, das einen Speicherplatz für die erste Netzvorrichtung umfasst, wobei die erste Netzvorrichtung Daten für die gemeinsame Nutzung von anderen Netzvorrichtungen speichern kann, und ein drittes Verzeichnis, das über das Dateisystem der Proxy-Vorrichtung (220, 221) Zugriff auf Daten, die von mindestens einer anderen Netzvorrichtung gemeinsam genutzt werden, gibt, erzeugt.

2. Verfahren nach Anspruch 1, **dadurch gekennzeichnet, dass** das Verfahren einen Schritt der Verbindung (404) einer Netzvorrichtung mit dem Netz umfasst, in dem die Proxy-Vorrichtung (220, 221) als Teil des Verbindungsschritts das in der ersten Netzvorrichtung erzeugte zweite Verzeichnis mit dem in der Proxy-Vorrichtung (220, 221) erzeugten ersten Verzeichnis verknüpft und eines oder mehrere Verzeichnisse in der Proxy-Vorrichtung (220, 221) mit dem dritten Verzeichnis verknüpft, um der ersten Netzvorrichtung Zugriff auf von mindestens einer anderen Netzvorrichtung gemeinsam genutzte Daten zu geben.

3. Verfahren nach Anspruch 1 oder 2, **dadurch gekennzeichnet, dass** die Proxy-Vorrichtung (220, 221) Dateizugriffsverfahren, die auf den Typ des Protokolls für die gemeinsame Nutzung von Netzbetriebsmitteln, das von der ersten Netzvorrichtung verwendet wird, anwendbar sind, in Dateizugriffsverfahren, die auf mindestens einen Typ von Dateizugriffsverfahren, die von der mindestens einen anderen Netzvorrichtung verwendet werden, anwendbar sind, übersetzt, wobei die Proxy-Vorrichtung (220, 221) die übersetzten Dateizugriffsverfahren an die mindestens eine andere Netzvorrichtung sendet.

4. Verfahren nach einem der Ansprüche 1 bis 3, **dadurch gekennzeichnet, dass** das Dateisystem der Proxy-Vorrichtung (220, 221) ein virtuelles Dateisystem ist.

5. System, das eine Proxy-Vorrichtung (220, 221) zur gemeinsamen Nutzung von Daten in einem Netz und eine erste Netzvorrichtung umfasst, **dadurch gekennzeichnet, dass** das Netz mehrere Netzvorrichtungen umfasst, die mehrere unterschiedliche Protokolle für die gemeinsame Nutzung von Netzbetriebsmitteln verwenden, wobei die Proxy-Vorrichtung (220, 221) ein Dateisystem aufweist, wobei die Proxy-Vorrichtung die folgenden Mittel umfasst:
eine Netzschnittstelle (2212) für den Empfang (400) einer Anforderung für die Registrierung der ersten Netzvorrichtung zum Verwenden des Netzes von der ersten Netzvorrichtung, wobei die Proxy-Vorrichtung (220, 221) von der ersten Netzvorrichtung und während der Registrierung Informationen, die die Identifizierung eines Typs des Betriebssystems und eines Typs des Protokolls für die gemeinsame Nutzung von Netzbetriebsmitteln, die von der ersten Netzvorrichtung verwendet werden, ermöglichen, erhält;
eine Verarbeitungseinheit (2210) zur Bestimmung (401) eines Typs des Protokolls für die gemeinsame Nutzung von Netzbetriebsmitteln, das von der Proxy-Vorrichtung (220, 221) verwendet werden soll, in Abhängigkeit von den Informationen, um der ersten Netzvorrichtung Zugriff auf von anderen Netzvorrichtungen gemeinsam genutzte Daten zu geben;
wobei die Verarbeitungseinheit (2210) ferner zur Erzeugung (401) eines ersten Verzeichnisses in dem Dateisystem der Proxy-Vorrichtung (220, 221) in Übereinstimmung mit dem bestimmten Typ des Protokolls für die gemeinsame Nutzung von Netzbetriebsmitteln konfiguriert ist, wobei das erste Verzeichnis für die Proxy-Vorrichtung als ein Zugriffspunkt auf von der ersten Netzvorrichtung gemeinsam genutzte und gespeicherte Daten bestimmt wird;
eine Netzschnittstelle (2212) zur Sendung (402) einer Anwendung, die Anweisungen umfasst, die für das Betriebssystem und für das Protokoll für die gemeinsame Nutzung von Netzbetriebsmitteln, die von der ersten Netzvorrichtung verwendet werden, ausgelegt sind, an die erste Netzvorrichtung; und
wobei die Anwendung, wenn sie durch die erste Netzvorrichtung ausgeführt wird (403), in dem Dateisystem der ersten Netzvorrichtung ein zweites Verzeichnis, das einen Speicherplatz für die erste Netzvorrichtung umfasst, wobei die erste Netzvorrichtung Daten für die gemeinsame Nutzung von anderen Netzvorrichtungen speichern kann, und
ein drittes Verzeichnis, das über das Dateisystem der Proxy-Vorrichtung (220, 221) Zugriff auf Daten, die von mindestens einer anderen Netzvorrichtung gemeinsam genutzt werden, gibt, erzeugt.

6. System nach Anspruch 5, **dadurch gekennzeichnet, dass** die Verarbeitungseinheit der Proxy-Vorrichtung ferner dafür konfiguriert ist, eine Netzvorrichtung mit dem Netz zu verbinden und das in der ersten Netzvorrichtung erzeugte zweite Verzeichnis mit dem in der Proxy-Vorrichtung erzeugten ersten Verzeichnis zu verknüpfen und eines oder mehrere Verzeichnisse in der Proxy-Vorrichtung, die der ersten Netzvorrichtung Zugriff auf von mindestens einer anderen Netzvorrichtung gemeinsam genutzte Daten gibt, mit dem dritten Verzeichnis zu verknüpfen.

7. System nach Anspruch 5 oder 6, **dadurch gekennzeichnet, dass** die Verarbeitungseinheit der Proxy-Vorrichtung ferner dafür konfiguriert ist, Dateizugriffsverfahren, die auf den von der ersten Netzvorrichtung verwendeten Typ des Protokolls für die gemeinsame Nutzung von Netzbetriebsmitteln anwendbar sind, in Dateizugriffverfahren, die auf mindestens einen Typ von Dateizugriffsverfahren, die von der mindestens einen anderen Netzvorrichtung verwendet werden, anwendbar sind, zu übersetzen, und dass die Netzschnittstelle der Proxy-Vorrichtung ferner dafür konfiguriert ist, die übersetzten Dateizugriffsverfahren an die mindestens eine andere Netzvorrichtung zu senden.

## Revendications

1. Procédé de partage de données dans un réseau, **caractérisé en ce que** ledit réseau comprend une pluralité de dispositifs utilisant une pluralité de protocoles de partage de ressources réseau différents, ledit procédé étant implémenté par un dispositif proxy (220, 221) présentant un système de fichier, ledit procédé comprenant les étapes suivantes :
- réception (400), à partir d'un premier dispositif réseau, d'une requête pour enregistrement dudit premier dispositif réseau pour utiliser ledit réseau, ledit dispositif proxy (220, 221) obtenant, dudit premier dispositif réseau et lors dudit enregistrement, des informations permettant l'identification d'un type de système d'exploitation et d'un type de protocole de partage de ressources réseau utilisé par ledit premier dispositif réseau ;
- détermination (401), en fonction desdites informations de type, d'un type de protocole de partage de ressources réseau à utiliser par ledit dispositif proxy (220, 221) permettant de donner audit premier dispositif réseau l'accès aux données partagées par d'autres dispositifs réseau ;
- création (401), selon ledit type de protocole de partage de ressources réseau déterminé, d'un premier répertoire dans ledit système de fichier dudit dispositif proxy (220, 221), ledit premier répertoire étant destiné à être un point d'accès pour ledit dispositif proxy aux données partagées et enregistrées par ledit premier dispositif ;
- transmission (402) audit premier dispositif réseau d'une application comprenant des instructions adaptées audit système d'exploitation et audit protocole de partage des ressources réseau utilisé par ledit premier dispositif réseau ;
- exécution (403) de ladite application par ledit premier dispositif, ladite application créant, dans ledit système de fichier dudit premier dispositif, un deuxième répertoire comprenant un espace de stockage pour ledit premier dispositif, où ledit premier dispositif peut stocker des données à partager avec d'autres dispositifs réseau, et un troisième répertoire donnant accès via ledit système de fichier dudit dispositif proxy (220, 221) aux données partagées par au moins un autre dispositif réseau.

2. Procédé selon la revendication 1, **caractérisé en ce que** ledit procédé comprend une étape de connexion (404) d'un dispositif réseau audit réseau, dans lequel ledit dispositif proxy (220, 221), en tant que partie de ladite étape de connexion, joint ledit deuxième répertoire créé sur ledit premier dispositif réseau audit premier répertoire créé sur ledit dispositif proxy (220, 221), et joint audit troisième répertoire un ou plusieurs répertoires sur le dispositif proxy (220, 221) donnant au premier dispositif réseau un accès aux données partagées par au moins un autre dispositif réseau.

3. Procédé selon la revendication 1 ou 2, **caractérisé en ce que** ledit dispositif proxy (220, 221) traduit les procédés d'accès aux fichiers applicables audit type de protocole de partage de ressources réseau utilisé par ledit premier dispositif réseau en procédés d'accès aux fichiers applicables à au moins un type de procédé d'accès aux fichiers utilisé par ledit au moins un autre dispositif réseau, et ledit dispositif proxy (220, 221) transmettant lesdits procédés d'accès aux fichiers traduits audit au moins un autre dispositif réseau.

4. Procédé selon l'une quelconque des revendications 1 à 3, **caractérisé en ce que** ledit système de fichier dudit dispositif proxy (220, 221) est un système de fichier virtuel.

5. Système comprenant un dispositif proxy (220, 221) permettant de partager des données dans un réseau et un premier dispositif réseau, **caractérisé en ce que** ledit réseau comprend une pluralité de dispositifs réseau utilisant une pluralité de protocoles de partage de ressources réseau, ledit dispositif proxy (220, 221) présentant un système de fichier, ledit dispositif proxy comprenant les moyens suivants :
- une interface réseau (2212) permettant de recevoir (400), en provenance du premier dispositif réseau, une requête d'enregistrement dudit premier dispositif réseau pour utiliser ledit réseau, ledit dispositif proxy (220, 221) obtenant, à partir dudit premier dispositif réseau et lors dudit enregistrement, des informations permettant l'identification d'un type de système d'exploitation et d'un type de protocole de partage de ressources réseau utilisé par ledit premier dispositif réseau ;
- une unité de traitement (2210) permettant la détermination (401), en fonction desdites informations, d'un type de protocole de partage de ressources réseau à utiliser par ledit dispositif proxy (220, 221) permettant de donner audit premier dispositif réseau un accès aux données partagées par d'autres dispositifs réseau ;
- ladite unité de traitement (2210) étant en outre configurée pour la création (401), selon ledit type de protocole de partage de ressources réseau déterminé, d'un premier répertoire dans ledit système de fichier dudit dispositif proxy (220, 221), ledit premier répertoire étant destiné à être un point d'accès pour ledit dispositif proxy aux données partagées et stockées par ledit premier dispositif réseau ;
- une interface réseau (2212) permettant la transmission (402) audit premier dispositif réseau d'une application comprenant des instructions adaptées audit système d'exploitation et audit protocole de partage des ressources réseau utilisé par ledit premier dispositif réseau ; et
- ladite application, lorsqu'exécutée (403) par ledit premier dispositif réseau, créant, dans ledit système de fichier dudit premier dispositif réseau, un deuxième répertoire comprenant un espace de stockage pour ledit premier dispositif réseau, où ledit premier dispositif réseau peut stocker des données à partager avec d'autres dispositifs réseau, et un troisième répertoire donnant accès via ledit système de fichier dudit dispositif proxy (220, 221) aux données partagées par au moins un autre dispositif réseau.

6. Système selon la revendication 5, **caractérisé en ce que** ladite unité de traitement dudit dispositif proxy est configurée en outre pour connecter un dispositif réseau audit réseau, et pour joindre ledit deuxième répertoire créé sur ledit premier dispositif réseau audit premier répertoire créé sur ledit dispositif proxy, et pour joindre audit troisième répertoire un ou plusieurs répertoires sur le dispositif proxy donnant au premier dispositif réseau un accès aux données partagées par au moins un autre dispositif réseau.

7. Système selon la revendication 5 ou 6, **caractérisé en ce que** ladite unité de traitement dudit dispositif proxy est configurée en outre pour traduire les procédés d'accès aux fichiers applicables audit type de protocole de partage de ressources réseau utilisé par ledit premier dispositif réseau en procédés d'accès aux fichiers applicables à au moins un type de procédé d'accès aux fichiers utilisé par ledit au moins un autre dispositif réseau, et **en ce que** ladite interface réseau dudit dispositif proxy est configurée en outre pour transmettre lesdits procédés d'accès aux fichiers traduits audit au moins un autre dispositif réseau.
